# EUROPEAN PATENT APPLICATION

(11) **EP 4 575 766 A1**
(43) Date of publication of application: **25.06.2025**
(21) Application number: 23876210.8
(22) Date of filing: 20.06.2023
(51) Int. Cl.: G06F 8/41

(54) **CODE MANAGEMENT METHOD AND RELATED DEVICE**

(30) Priority: 13.10.2022 CN 202211255384
(71) Applicant: Huawei Cloud Computing Technologies Co., Ltd., Guiyang, Guizhou 550025 (CN)
(72) Inventor: SHEN, Bo, Guiyang, Guizhou 550025 (CN); LIANG, Guangtai, Guiyang, Guizhou 550025 (CN)
(74) Representative: Pfenning, Meinig & Partner mbB
(86) International application number: PCT/CN2023/101370
(87) International publication number: WO 2024/078000

(57) **Abstract**

This application provides a code management method, including: receiving a task description that is input by a user; decomposing the task description into a plurality of subtask descriptions; and generating code for a plurality of subtasks based on the plurality of subtask descriptions, where the code for the plurality of subtasks one-to-one corresponds to the plurality of subtask descriptions. **In** the method, a task is decomposed into a plurality of general-purpose tasks or atomic tasks (tasks that do not support further decomposition) by introducing decomposition of a task description, so that accuracy of code generation in a complex multi-step task is improved, a good code generation effect is achieved, and a service requirement can be met.

## Description

This application claims priority to Chinese Patent Application No. 202211255384.2, filed with the China National Intellectual Property Administration on October 13, 2022 and entitled "CODE MANAGEMENT METHOD AND RELATED DEVICE", which is incorporated herein by reference in its entirety.

### TECHNICAL FIELD

This application relates to the field of artificial intelligence (artificial intelligence, AI) technologies, and in particular, to a code management method and system, a computing device cluster, a computer-readable storage medium, and a computer program product.

### BACKGROUND

A code generation (code generation) technology or a program synthesis (program synthesis) technology has always been a hot topic in academic research of the software engineering (software engineering, SE) field and the artificial intelligence field, and has attracted much attention from the industry due to great commercial value thereof. In recent years, benefited from achievements of artificial intelligence research in natural language processing (natural language processing, NLP) and programming language processing (programming language processing, PLP), a combination of technologies in the software engineering field and the artificial intelligence field has gradually promoted code generation related technologies from academic research to practical application. To improve software development efficiency, various AI-based code generation tools emerge.

Currently, the AI-based code generation tools usually depend on a large-scale pre-trained language model (pre-trained language model, PLM) and a causal language model (causal language model, CLM) that is obtained through continuous training on massive programming language corpuses (such as code). The CLM may generate code of a specific programming language based on a natural language description that is input by a user, to meet a requirement expressed by the user in the natural language description.

However, the AI-based code generation tools highly depend on an input natural language description, and quality, a level, and details of the natural language description greatly affect a generation effect. Consequently, overall accuracy of code generated by the AI-based code generation tools is low, and it is difficult to meet a service requirement.

### SUMMARY

This application provides a code management method. In the method, a task is decomposed into a plurality of general-purpose tasks or atomic tasks (tasks that do not support further decomposition) by introducing decomposition of a task description, so that accuracy of code generation in a complex multi-step task is improved, a good code generation effect is achieved, and a service requirement can be met. This application further provides a code management system corresponding to the method, a computing device cluster, a computer-readable storage medium, and a computer program product.

According to a first aspect, this application provides a code management method. The method may be performed by a code management system. The code management system may be a software system, and the software system may be deployed on a computing device cluster. The computing device cluster executes program code of the software system, to perform the code management method in this application. In some embodiments, the code management system may alternatively be a hardware system having a code management function. When the hardware system runs, the code management method in this application is performed. For example, the code management system may be a computing device cluster having the code management function.

Specifically, the code management system may receive a task description that is input by a user, decompose the task description into a plurality of subtask descriptions, and then generate code for a plurality of subtasks based on the plurality of subtask descriptions, where the code for the plurality of subtasks one-to-one corresponds to the plurality of subtask descriptions.

Different from a conventional code generation tool that generates code from left to right, the method more naturally follows a divide-and-conquer mindset from a whole to parts in a development process. A decomposed natural language description and corresponding subtasks are easier to understand and generate for the user. In addition, code can also be reused. In this way, code generation efficiency and quality are improved.

In some possible implementations, the code management system may decompose the task description into reference descriptions of the plurality of subtasks by using a task description decomposition model, and obtain the plurality of subtask descriptions based on a feedback of the user on the reference descriptions of the plurality of subtasks.

In the method, the task description is automatically decomposed by using the task description decomposition model, and more fine-grained and more imperative subtask descriptions are generated, so that accuracy of code generation is further improved.

In some possible implementations, the feedback of the user on the reference descriptions of the plurality of subtasks may include confirmation, modification, or supplement. In the method, a user feedback is introduced, and the user confirms, modifies, or supplements a decomposition result. In this way, a subtask description obtained through decomposition is more accurate, and accuracy of generated code is further improved.

In some possible implementations, the code management system may extract a task description example and a subtask description example from a programming language corpus, and train the task description decomposition model based on the task description example and the subtask description example by using a generative pre-training method, where a task description is used as an input of the task description decomposition model, and a subtask description is used as an output of the task description decomposition model.

In a software development process, a comment and code often appear alternately, and an embedded relationship exists between comments at different levels. In the method, examples are extracted from the programming language corpus, to train the task description decomposition model, so as to obtain a better training effect. In this way, accuracy of the decomposition of the task description is improved.

In some possible implementations, the code management system may decompose the task description into a plurality of first subtask descriptions, and present the plurality of first subtask descriptions to the user. When the user triggers a decomposition operation, the code management system may decompose a target subtask description in the plurality of first subtask descriptions into a plurality of second subtask descriptions.

It is considered that there may be embedding in a high-level task. In the method, human-machine interaction is introduced, and the user determines whether to further decompose the subtask description, so that more accurate decomposition of the task description is implemented.

In some possible implementations, the code management system may further present a comment on the code for the subtask to the user. The comment on the code for the subtask may include the subtask description. In the method, the user may intuitively obtain a subtask description corresponding to the code for the subtask, so that the user provides a feedback on the code for the subtask easily.

In some possible implementations, the code management system may generate one or more of a code snippet, calling of a library function, or calling of a user-defined function based on the plurality of subtask descriptions. In the method, based on reverse generation of code, a function of automatically selecting a form of generated code can be implemented based on a granularity of the subtask description by using a code snippet completion algorithm.

In some possible implementations, when the user-defined function is not defined, the code management system may further generate a declaration of the user-defined function and implementation code of the user-defined function based on the calling of the user-defined function and a context of the user-defined function. In the method, a reverse function generation algorithm is used to reversely generate a declaration and a definition for a function that is called but does not exist. In this way, a code generation process more complies with best practice of software development and reconstruction.

In some possible implementations, the code management system may generate the declaration of the user-defined function based on the calling of the user-defined function and the context of the user-defined function. The declaration of the user-defined function may include one or more of a comment, a parameter list, a parameter type, and a return value type of the user-defined function. Then, the code management system may generate the implementation code of the user-defined function based on the declaration of the user-defined function. In the method, the declaration of the user-defined function may be automatically generated from a function calling statement and the context of the function, so that the implementation code of the user-defined function is generated, to complete code generation.

In some possible implementations, the code management system may further receive a feedback of the user on the declaration of the user-defined function, and update the declaration of the user-defined function based on the feedback of the user on the declaration of the user-defined function. In the method, the user feedback is introduced, so that the user can confirm, modify, or supplement the generated declaration of the user-defined function, to ensure accuracy of the declaration of the user-defined function.

In some possible implementations, when the user triggers a decomposition operation, the code management system may decompose the declaration of the user-defined function, and generate the implementation code of the user-defined function based on a decomposition result. In the method, the code generation may be triggered again by using the declaration of the user-defined function as a subtask, so that the code becomes more complete gradually.

In some possible implementations, the code management system may store the code for the plurality of subtasks in an output path specified by the user, so that the user manages the generated code easily.

In some possible implementations, the code management system may be an integrated development environment (integrated development environment, IDE). The IDE may include a local IDE or a cloud IDE. The IDE has a code generation capability or plug-in of task description based decomposition. When the capability or the plug-in of the IDE is triggered, the IDE performs the steps of receiving a task description that is input by a user, decomposing the task description into a plurality of subtask descriptions, and generating code for subtasks based on the plurality of subtask descriptions. In this way, it can be convenient for a developer to perform the software development, to improve development efficiency.

In some possible implementations, the code management system may be a cloud service. The cloud service has a code generation interface. When the code generation interface is invoked, the cloud service may perform the steps of receiving a task description that is input by a user, decomposing the task description into a plurality of subtask descriptions, and generating code for subtasks based on the plurality of subtask descriptions. In this way, a code generation service can be provided for a large quantity of developers by using the cloud service to meet a service requirement.

According to a second aspect, this application provides a code management system. The system includes:
an interaction module, configured to receive a task description that is input by a user;
a decomposition module, configured to decompose the task description into a plurality of subtask descriptions; and
a generation module, configured to generate code for a plurality of subtasks based on the plurality of subtask descriptions, where the code for the plurality of subtasks one-to-one corresponds to the plurality of subtask descriptions.

In some possible implementations, the decomposition module is specifically configured to:
decompose the task description into reference descriptions of the plurality of subtasks by using a task description decomposition model; and
obtain the plurality of subtask descriptions based on a feedback of the user on the reference descriptions of the plurality of subtasks.

In some possible implementations, the feedback of the user on the reference descriptions of the plurality of subtasks includes confirmation, modification, or supplement.

In some possible implementations, the task description decomposition model is obtained through training in the following manner:
extracting a task description example and a subtask description example from a programming language corpus; and
training the task description decomposition model based on the task description example and the subtask description example by using a generative pre-training method, where a task description is used as an input of the task description decomposition model, and a subtask description is used as an output of the task description decomposition model.

In some possible implementations, the decomposition module is specifically configured to:
decompose the task description into a plurality of first subtask descriptions;
present the plurality of first subtask descriptions to the user; and
when the user triggers a decomposition operation, decompose a target subtask description in the plurality of first subtask descriptions into a plurality of second subtask descriptions.

In some possible implementations, the interaction module is further configured to:
present a comment on the code for the subtask to the user, where the comment on the code for the subtask includes the subtask description.

In some possible implementations, the generation module is specifically configured to:
generate one or more of a code snippet, calling of a library function, or calling of a user-defined function based on the plurality of subtask descriptions.

In some possible implementations, when the user-defined function is not defined, the generation module is further configured to:
generate a declaration of the user-defined function and implementation code of the user-defined function based on the calling of the user-defined function and a context of the user-defined function.

In some possible implementations, the generation module is specifically configured to:
generate the declaration of the user-defined function based on the calling of the user-defined function and the context of the user-defined function, where the declaration of the user-defined function includes one or more of a comment, a parameter list, a parameter type, and a return value type of the user-defined function; and
generate the implementation code of the user-defined function based on the declaration of the user-defined function.

In some possible implementations, the interaction module is further configured to:
receive a feedback of the user on the declaration of the user-defined function; and
update the declaration of the user-defined function based on the feedback of the user on the declaration of the user-defined function.

In some possible implementations, the generation module is specifically configured to:
when the user triggers a decomposition operation, decompose the declaration of the user-defined function; and
generate the implementation code of the user-defined function based on a decomposition result.

According to a third aspect, this application provides a computing device cluster. The computing device cluster includes at least one computing device, and the at least one computing device includes at least one processor and at least one memory. The at least one processor and the at least one memory communicate with each other. The at least one processor is configured to execute instructions stored in the at least one memory, to enable the computing device or the computing device cluster to perform the code management method according to any one of the first aspect or the implementations of the first aspect.

According to a fourth aspect, this application provides a computer-readable storage medium. The computer-readable storage medium stores instructions. The instructions instruct a computing device or a computing device cluster to perform the code management method according to any one of the first aspect or the implementations of the first aspect.

According to a fifth aspect, this application provides a computer program product including instructions. When the computer program product runs on a computing device or a computing device cluster, the computing device or the computing device cluster is enabled to perform the code management method according to any one of the first aspect or the implementations of the first aspect.

Based on the implementations provided in the foregoing aspects, this application may further combine technologies to provide more implementations.

### BRIEF DESCRIPTION OF DRAWINGS

To describe the technical methods in embodiments of this application more clearly, the following briefly describes the accompanying drawings for describing the embodiments.
FIG. 1 is a diagram of an architecture of a code management system according to an embodiment of this application;
FIG. 2 is a flowchart of a code management method according to an embodiment of this application;
FIG. 3 is a diagram of an application scenario of a code management method according to an embodiment of this application;
FIG. 4 is a diagram of an interface of a front-end interface according to an embodiment of this application;
FIG. 5 is a diagram of an interface of a human-machine interaction interface according to an embodiment of this application;
FIG. 6 is a diagram of an interface of a human-machine interaction interface after modification or filling is performed according to an embodiment of this application;
FIG. 7 is a diagram of an interface of another front-end interface according to an embodiment of this application;
FIG. 8 is a diagram of a code generation result according to an embodiment of this application;
FIG. 9 is a diagram of triggering reverse generation of an undefined function according to an embodiment of this application;
FIG. 10 is a diagram of a function definition of an import statement or re-implementation to generate an undefined function according to an embodiment of this application;
FIG. 11 is a diagram of an application scenario of another code management method according to an embodiment of this application;
FIG. 12 is a diagram of a structure of a computing device according to an embodiment of this application;
FIG. 13 is a diagram of a structure of a computing device cluster according to an embodiment of this application;
FIG. 14 is a diagram of a structure of a computing device cluster according to an embodiment of this application; and
FIG. 15 is a diagram of a structure of a computing device cluster according to an embodiment of this application.

### DESCRIPTION OF EMBODIMENTS

In embodiments of this application, the terms "first" and "second" are used merely for the purpose of description, and should not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

Code generation (code generation) is a technology in which artificial intelligence (artificial intelligence, AI) is used to assist developers in developing code. The code generation may be classified into the following types: code generation based on code (also referred to as code2code) and code generation based on text (also referred to as text2code).

Specifically, through the text2code, code of a specific programming language is generated from a natural language description, to meet a requirement expressed by a user by using the natural language description. Similar to a process of code writing by the developer, a working process of a code generator (code generator) corresponding to the text2code is similar to a process in which the developer first writes a code comment, and then the code generator generates a code snippet corresponding to a function described by the comment. The code snippet is presented in a recommendation form, and the developer decides to accept or reject the recommendation, or further modifies the code after accepting the recommendation.

However, the foregoing code generation tools highly depend on an input natural language description, and quality, a level, and details of the natural language description greatly affect a generation effect. The generation effect is usually poor on a task that needs to be completed in a plurality of steps. Related research shows that accuracy of the code generation tool may be reduced by 70% when one step is added. Accuracy of code generated by the code generation tool is usually low, and it is difficult to meet a service requirement.

In view of this, this application provides a code management method. The method may be performed by a code management system. The code management system may be a software system. The software system may be deployed in a computing device cluster. The computing device cluster executes program code of the software system, to perform the code management method in this application. The code management system is used in a scenario in which a developer writes code in a code editor or an integrated development environment (integrated development environment, IDE). Based on this, the code management system may directly serve a user in a form of an IDE plug-in. The code management system may alternatively be provided to another tool in a form of a cloud service or a capability and invoked in a form of an application programming interface (application programming interface, API). In some possible implementations, the code management system may alternatively be a hardware system. When the hardware system runs, the code management method in this application is performed. For ease of description, an example in which the code management system is a software system is used below for description.

Specifically, the code management system receives a task description that is input by the user, decomposes the task description into a plurality of subtask descriptions, and then generates code for a plurality of subtasks based on the plurality of subtask descriptions, where the code for the plurality of subtasks one-to-one corresponds to the plurality of subtask descriptions.

In the method, a task is decomposed into a plurality of general-purpose tasks or atomic tasks (tasks that do not support further decomposition) by introducing decomposition of a task description, so that accuracy of code generation in a complex multi-step task is improved, a good code generation effect is achieved, and a service requirement can be met. Further, in the method, a user feedback may be further introduced, and the user confirms, modifies, or supplements a decomposition result. In this way, a subtask description obtained through decomposition is more accurate, and accuracy of generated code is further improved.

In addition, different from a conventional code generation tool that generates code from left to right, the method more naturally follows a divide-and-conquer mindset from a whole to parts in a development process. A decomposed natural language description and corresponding subtasks are easier to understand and generate for the user. In addition, code can also be reused. In this way, code generation efficiency and quality are improved.

To make the technical solutions of this application clearer and easier to understand, the following describes an architecture of the code management system in embodiments of this application with reference to the accompanying drawings.

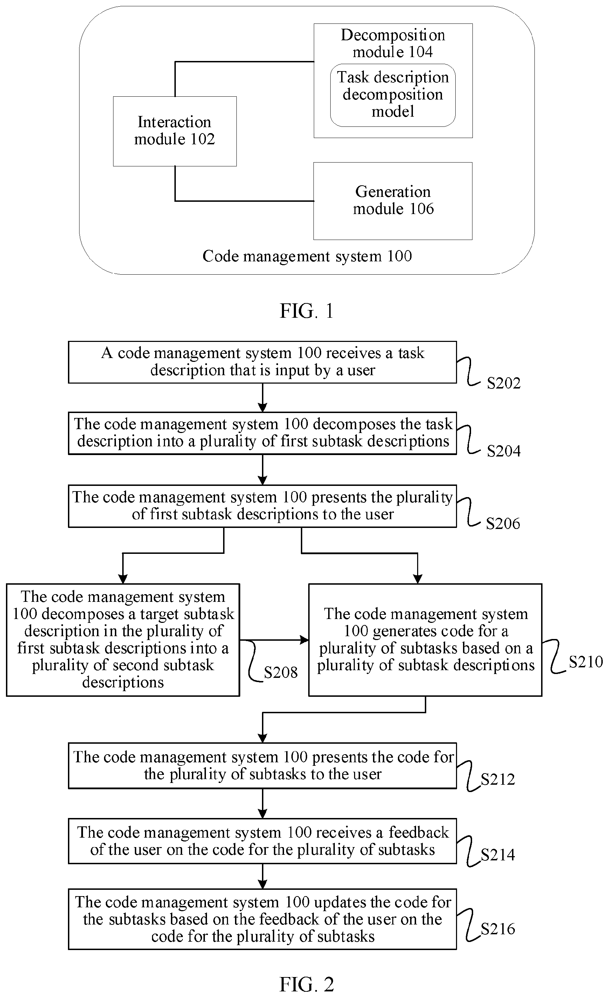

Refer to a diagram of an architecture of a code management system shown in FIG. 1. The code management system 100 includes an interaction module 102, a decomposition module 104, and a generation module 106. The following describes functions of the modules separately.

The interaction module 102 is configured to receive a task description that is input by a user. The task description may be a natural language description. The task description is originally input by the user, and therefore, is also referred to as an original description. For example, the original description may be "Get the default branch of a repo on GitHub". The interaction module 102 may receive, through a code editing interface in an interaction interface, the task description that is input by the user. The interaction interface may be a graphical user interface (graphical user interface, GUI) or a command user interface (command user interface, CUI).

The decomposition module 104 is configured to decompose the task description into a plurality of subtask descriptions. The subtask descriptions are obtained by decomposing the task description. Therefore, the subtask description may also be referred to as a decomposed description. The task description may be usually used as a file-level, class-level, or function-level comment, and the subtask description may be usually used as a code block-level or line-level comment. For example, the subtask description may be "clone the repo", "run git command", or "print branch name".

In a specific implementation, the decomposition module 104 may decompose the task description into the plurality of task sub-descriptions by using a task description decomposition model. In some possible implementations, the decomposition module 104 may decompose the task description into reference descriptions of a plurality of subtasks by using the task description decomposition model. The interaction module 102 is further configured to present the reference descriptions of the plurality of subtasks to the user, and receive a feedback of the user on the reference descriptions of the plurality of subtasks. The decomposition module 104 obtains the plurality of subtask descriptions based on the feedback of the user on the reference descriptions of the plurality of subtasks. The feedback of the user on the reference descriptions of the plurality of subtasks may include confirmation, modification, or supplement.

The generation module 106 is configured to generate code for a plurality of subtasks based on the plurality of subtask descriptions. The code for the plurality of subtasks one-to-one corresponds to the plurality of subtask descriptions. Further, similar to the decomposition module 104, the interaction module 102 is further configured to present, to the user, the code for the subtasks generated by the generation module 106, and receive the feedback of the user on the code for the subtasks, where the feedback may include confirmation, modification, or supplement. Then, the generation module 106 may update the code for the plurality of subtasks based on the feedback of the user on the code for the plurality of subtasks.

Based on the code management system 100 provided in embodiments of this application, embodiments of this application further provide a code management method. The following describes the code management method in embodiments of this application in detail with reference to the accompanying drawings.

Refer to a flowchart of a code management method shown in FIG. 2. The method includes the following steps.

S202: The code management system 100 receives a task description that is input by a user.

Specifically, the task description that is input by the user may be a natural language description, and the task description may be a higher-level task description, for example, a file-level, class-level, or function-level task description, used for generating a file, a function, or a class. The task description uses a function or a specific implementation of a natural language description task. Therefore, the task description may be used as a comment on code. To distinguish the code from the comment, the task description may include a keyword representing the comment, for example, "#".

In a specific implementation, the code management system 100 may present a code editing interface to the user. The code editing interface may be a GUI or a CUI. The user may input, through the GUI or the CUI, a natural language description with a keyword representing a comment used as a start character. The code management system 100 may receive the natural language description.

S204: The code management system 100 decomposes the task description into a plurality of first subtask descriptions.

Specifically, the code management system 100 may decompose the task description by using a task description decomposition model. The task description decomposition model automatically decomposes the task description (that is, an original description or an original comment) to generate more fine-grained and more imperative subtask description.

It should be noted that the code management system 100 may directly use a description obtained through automatic decomposition by the task description decomposition model as the first subtask description, or may use a description obtained through automatic decomposition by the task description decomposition model as a reference description, and human-machine interaction is introduced, so that the user determines the first subtask description based on the reference description.

S206: The code management system 100 presents the plurality of first subtask descriptions to the user. When the user triggers a decomposition operation, S208 is performed; otherwise, S210 is performed.

Specifically, when the code management system 100 directly uses the description obtained through automatic decomposition by the task description decomposition model as the first subtask description, the code management system 100 presents, to the user, the description obtained through automatic decomposition by the task description decomposition model. When the human-machine interaction is introduced into the code management system 100, the code management system 100 presents, to the user, the description obtained through automatic decomposition by the task description decomposition model, and receives a feedback of the user on the description, for example, confirmation, modification, or supplement on the description. The code management system 100 may obtain the plurality of first subtask descriptions based on the feedback of the user on the description, and present the plurality of first subtask descriptions to the user.

It is considered that there may be embedding in a high-level task. The user may determine whether the plurality of first subtask descriptions can be further decomposed. When there is a target subtask description that can be further decomposed in the plurality of first subtask descriptions, the user may trigger a decomposition operation. Correspondingly, the code management system 100 may perform S208 in response to the decomposition operation. When there is no target subtask description that can be further decomposed in the plurality of first subtask descriptions, in other words, the first subtask descriptions are all atomic task descriptions, the code management system 100 may directly perform S210.

S208: The code management system 100 decomposes the target subtask description in the plurality of first subtask descriptions into a plurality of second subtask descriptions.

The target subtask description can be further decomposed, in other words, the target subtask description is a high-level task description. The code management system 100 may input the target subtask description into the task description decomposition model, to obtain a more fine-grained subtask description. Similar to decomposing the task description into the plurality of first subtask descriptions, the code management system 100 may directly use the description obtained through automatic decomposition by the task description decomposition model as the second subtask description, and human-machine interaction may also be introduced, so that the user provides a feedback on the description obtained through automatic decomposition, to obtain the second subtask description.

When there is no target subtask description that can be further decomposed in the plurality of second subtask descriptions, in other words, the second subtask descriptions are all atomic task descriptions, the code management system 100 may perform S210; otherwise, the code management system 100 may continue to decompose a description in the second subtask description that supports decomposition.

S204 to S208 are some specific implementations in which the code management system 100 decomposes the task description into a plurality of subtask descriptions. In another possible implementation of this embodiment of this application, the task description may be decomposed in another manner.

S210: The code management system 100 generates code for a plurality of subtasks based on a plurality of subtask descriptions.

When there is no target subtask description that can be further decomposed in the first subtask description, the plurality of subtask descriptions may be the plurality of first subtask descriptions. When there is a target subtask description that can be further decomposed in the first subtask description, the plurality of subtask descriptions may be first subtask descriptions other than the target subtask description and second subtask descriptions obtained by decomposing the target subtask description.

The code management system 100 may determine an implementation form of the subtask, and then generate code for the subtask based on the corresponding form. For example, for a simple step, the code management system 100 directly generates a code snippet. The code snippet may include a simple statement or a code block. The code block includes but is not limited to a variable declaration, an assignment statement, a branch, or a loop structure. For another example, for a step that may be implemented by using a library function (including but not limited to an API of a standard library or a third-party library), the code management system 100 generates calling of a corresponding library function. For another example, for a complex step, the code management system 100 generates calling of a user-defined function, and specifically, generates one or more function calling statements. A called user-defined function may be from another location of a project or may not exist.

When the user-defined function is not defined, the code management system 100 may generate a declaration of the user-defined function and implementation code of the user-defined function based on the calling of the user-defined function and a context of the user-defined function. Specifically, the code management system 100 may apply a software analysis technology to convert context information (such as a comment for modifying the function, an actual parameter passed in by the function, and use of a return value of the function) of function calling into information (such as a function-level comment, a parameter list and type, and a return value type) in a declaration of the function, and generate a signature (function signature) part of a function definition based on the information. This part may be used as a subtask and further input into the task description decomposition model for further decomposition. If a granularity is already atomic enough, the subtask may be directly input into a code generation model for an implementation, and generated code is used as a function body (function body) of the subtask to supplement the function definition.

S212: The code management system 100 presents the code for the plurality of subtasks to the user.

S214: The code management system 100 receives a feedback of the user on the code for the plurality of subtasks.

S216: The code management system 100 updates the code for the subtasks based on the feedback of the user on the code for the plurality of subtasks.

Similar to the feedback on the subtask descriptions, human-machine interaction may also be introduced into the code management system 100, so that the user provides a feedback on automatically generated code, for example, confirms, modifies, or supplements the automatically generated code, to ensure accuracy of the code.

For an implementation of a subtask, the user may perform common development operations such as modification, test, and debugging at any time to ensure accuracy of a part of code. Finally, after all subtasks are implemented, all code constitutes an implementation solution of a task described in the original description.

It should be noted that S212 to S216 are optional steps in this embodiment of this application, and S212 to S216 may not be performed when the code management method in this embodiment of this application is performed. For example, code that may be directly and automatically generated by the code management system 100 is used as implementation code of a subtask.

Based on the foregoing content, in the code management method provided in this embodiment of this application, an abstract high-level task description is automatically decomposed into subtask descriptions, and corresponding code is separately generated for fine-grained subtask descriptions, so that accuracy of the code can be improved. In addition, in the method, human-machine interaction may be introduced, the user confirms an automatically generated subtask description, and the user is allowed to modify and supplement the description, so that an input of an AI model used to generate code is more accurate, and the accuracy of the code is further improved.

In this method, different structures such as a code snippet, the calling of the library function, and the calling of the user-defined function may be dynamically determined based on a subtask granularity confirmed by the user. Finally formed code naturally has a clear structure and comment, and the user does not need to manually comment on the code, to reduce interaction costs. Further, when an undefined function exists in the calling of the user-defined function, a comment, a form, a parameter, a return type, and the like of expected calling of a function of the user in the generated code may be analyzed, and a declaration of a function is automatically generated. Then, the declaration of the function is used as a task description to be decomposed, and a granularity of a decomposed subtask is more atomic, facilitating maximizing an advantage of the AI model in generating universal code.

The following separately describes application of the code management method in different scenarios by using examples.

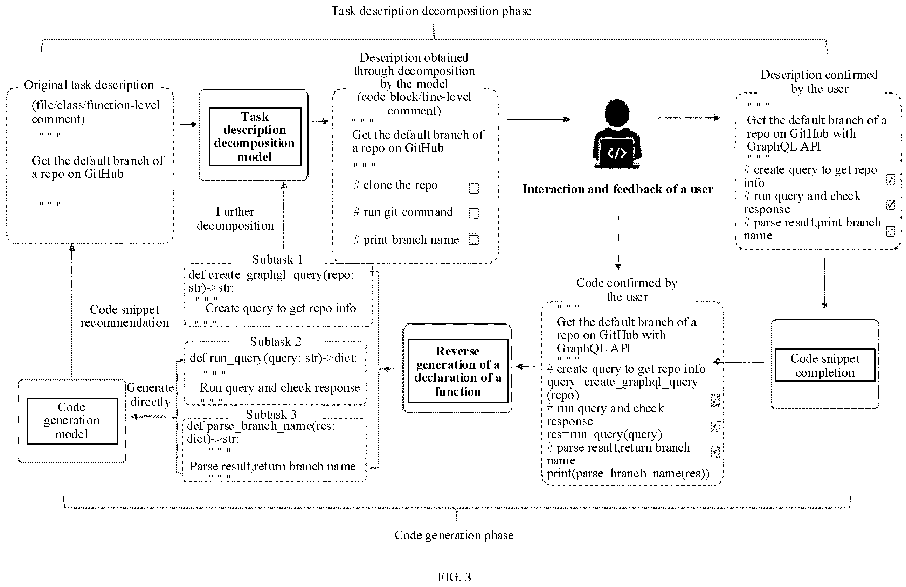

First, refer to a diagram of an application scenario of a code management method shown in FIG. 3. In the scenario, the code management system 100 directly serves a user in a form of an IDE plug-in. Different from a code generation tool of a same type, in this embodiment of this application, before and after a general code generation process, decomposition of a task description, interaction and a feedback of the user, and a reverse generation technology of a function are innovatively introduced, so that this embodiment is more effective than the tool of the same type in a complex multi-step task.

Specifically, a process of generating code by the code management system 100 may be divided into the following two phases: a task description decomposition phase based on human-machine interaction and a code generation phase in which reverse generation becomes a core.

In the task description decomposition phase based on human-machine interaction, the user provides an initial task description (a file/class/function-level comment). A task description decomposition model automatically decomposes an original comment, generates more fine-grained and more imperative subtask descriptions, and presents the subtask descriptions to the user in a form of a code block/line-level comment. The user may read the generated subtask descriptions and confirm, modify, or supplement the subtask descriptions. After the subtask descriptions are modified or supplemented, the user may continue to perform confirmation. After the confirmation by the user is complete, the code generation phase starts.

In the code generation phase in which the reverse generation becomes a core, the code management system 100 performs code implementation for the subtasks based on the subtask descriptions confirmed by the user. Step-by-step subtask descriptions may be gradually input into a code snippet completion algorithm from top to bottom. The algorithm may automatically select a generated code form based on a step granularity. The code form may include a code snippet, calling of a library function, or a calling of a user-defined function. The user may read code and confirm, modify, or supplement the code.

Further, a called user-defined function may be from another location of a project or may not exist. When the user-defined function does not exist, the code generation system 100 may reversely generate, by using a reverse function generation algorithm, a declaration and a definition for a function that is called but does not exist. Specifically, the code generation system 100 may generate a declaration of the function first by using the reverse function generation algorithm. The declaration of the function includes at least one of a function-level comment, a parameter list and type, and a return value type. Further, the code generation system 100 may generate a signature of a function definition based on the declaration of the function. The signature of the function definition may be used as a subtask description to input to the task description decomposition model for further decomposition. Certainly, if the user-defined function is atomic enough, the user-defined function may alternatively be directly input to a code generation model, and code generated by the code generation model is supplemented to the function definition as a function body.

The following describes implementation and working processes of the task description decomposition phase and the code generation phase in terms of a front-end interface, human-machine interaction, and a technical solution.

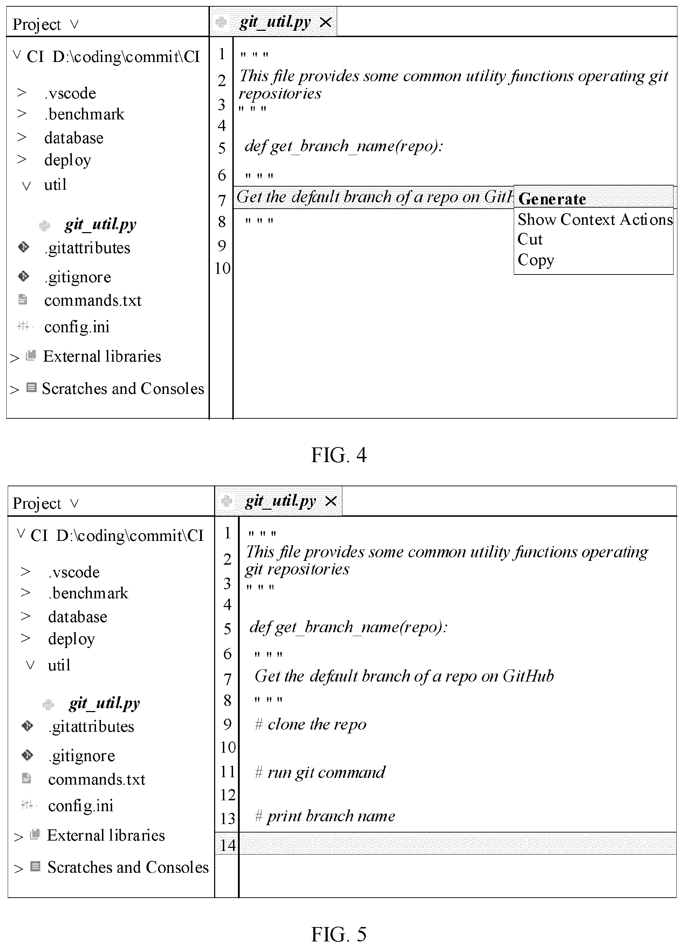

Refer to a diagram of a front-end interface shown in FIG. 4. Similar to another tool of a same type, a main implementation form of this embodiment is to serve as an extended function or a plug-in of a code editor or an IDE. Therefore, the front-end interface is a code generation auxiliary tool mainly embedded in the IDE.

An IDE of a Jetbrains series, a Python language, and function-level generation are used as examples. A user expects to generate a function named get_branch_name. A main function of the function is: "obtaining a default branch of a GitHub repository". The function accepts a parameter repo as an input, and needs to return a default branch name as an output. However, this description is not clear, and if code generation is performed directly, there may be a plurality of different and undesired generation results.

In the results, a code generation tool considers that a repo variable has an object, and directly and simply returns a branch name attribute of the variable. However, the function actually accepts a full name of the GitHub repository. The user may not store the repository locally, but this is not reflected in an existing signature and comment. Therefore, it is necessary to further clarify a requirement and a condition of the user through human-machine interaction. For example, the user may click "Generate" to trigger the code generation and enter a human-machine interaction interface.

Refer to a diagram of a human-machine interaction interface shown in FIG. 5. When the user gives a higher-level task description (for example, a function-level comment in this embodiment), the code management system 100 first attempts to generate a plurality of more specific step-by-step comments (for example, block-level and line-level comments in a function body) from the task description. In FIG. 5, a task of obtaining the default branch name of the GitHub repository is divided into three steps: downloading the repository and storing locally the repository, running a Git command, and printing the default branch name. However, the download is time-consuming and occupies disk space, and a Git tool may not be installed locally by the user. Therefore, for a lightweight operation of obtaining only the default branch name, this decomposition solution is excessively complex and still does not meet the requirement of the user.

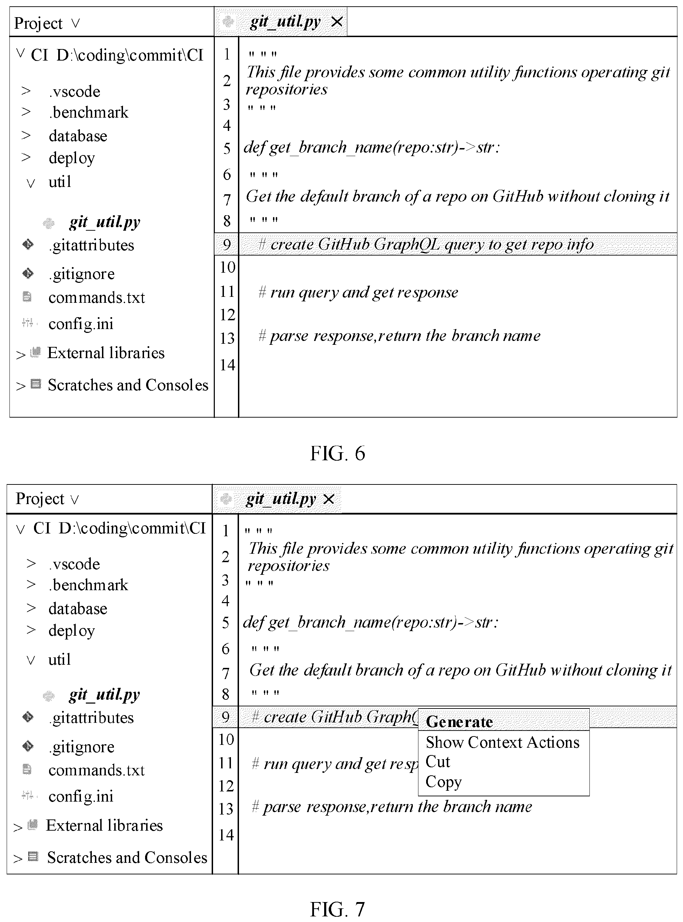

In this case, the user may directly delete all generated block-level and line-level comments. After the user pressing Enter again, the tool attempts to generate a different decomposition solution. To make the generated decomposition solution more comply with an actual requirement, the user may modify a function signature and a function comment to add more information and conditions, for example, add a parameter and a return value type, and specify conditions to be satisfied. FIG. 6 is a diagram of the human-machine interaction interface. When the user adds a parameter and a return value type as character strings in the signature, adds information, such as "there is no need to clone the repository", in the comment, and presses Enter, the tool generates another solution, including three steps: creating a GitHub GraphQL-format request, sending the request and obtaining a response, and parsing the response and returning a branch name field included in the response.

The task description may be decomposed into subtask descriptions by using a task description decomposition model. The task description decomposition model is obtained through training of an AI model. During software development, a comment and code often appear alternately, and an embedded relationship exists between comments at different levels, and a step decomposition process during code writing by a developer is recorded in the comments. For example, comments at file, class, and function levels usually describe overall functions or use methods of the code at a high abstraction level, while comments at line and block levels mainly explain functions of a modified code snippet and are used as step descriptions or detail supplements of function comments. Therefore, the code management system 100 may first extract a task description example and a subtask description example from a programming language corpus, for example, extract comments at various levels from massive source code, where a high-level comment is the task description example, and a sub-comment of the high-level comment is the subtask description example, and train the task description decomposition model based on the task description example and the subtask description example by using a generative pre-training method, where a task description is used as an input of the task description decomposition model, and a subtask description is used as an output of the task description decomposition model.

Then, refer to a diagram of another front-end interface shown in FIG. 7. After confirming a subtask description (also referred to as a step-by-step comment), a user presses a shortcut key (for example, Alt+Enter) in a line in which the step-by-step comment is located, or right-clicks a comment and selects "Generate code", so that the comment is input into an algorithm for code generation.

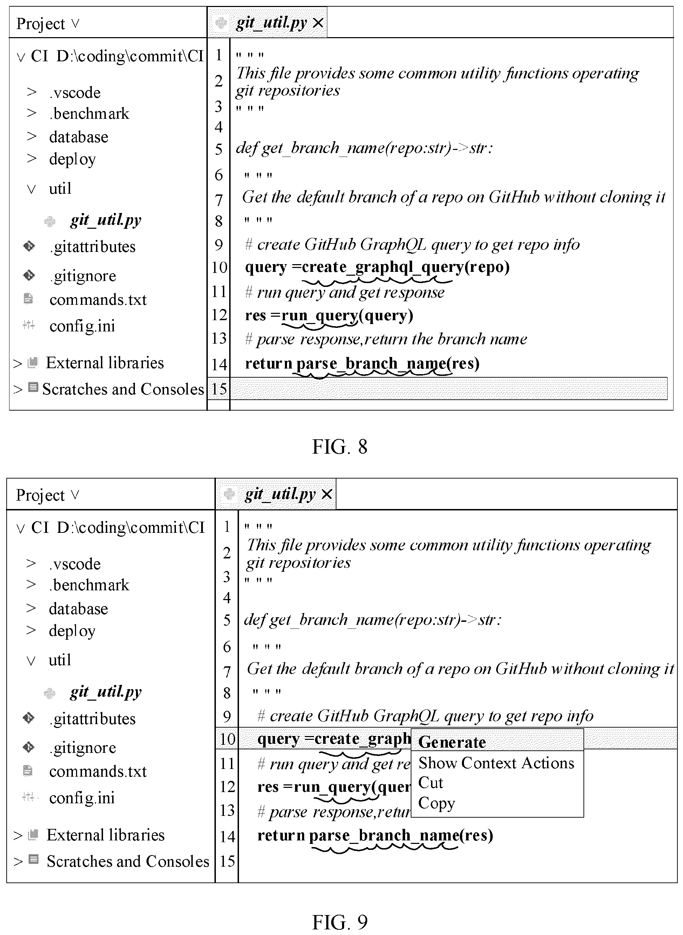

FIG. 8 is a diagram of a code generation result. As shown in FIG. 8, in this case, an IDE prompts several pieces of error information. Because generated code includes calling of an undefined function, a user expects that a function may be implemented in the function by using a part of code. In this case, each function may be considered as a subtask of an original task.

Usually, a developer needs to write a declaration or a definition of a function before calling the function. In addition, most code generation tools need to scan defined functions in a context before recommending code for calling an existing function. However, actually, a manner of implementing main logic first and temporarily using a sub-function as a black box more complies with best practice of software development and reconstruction.

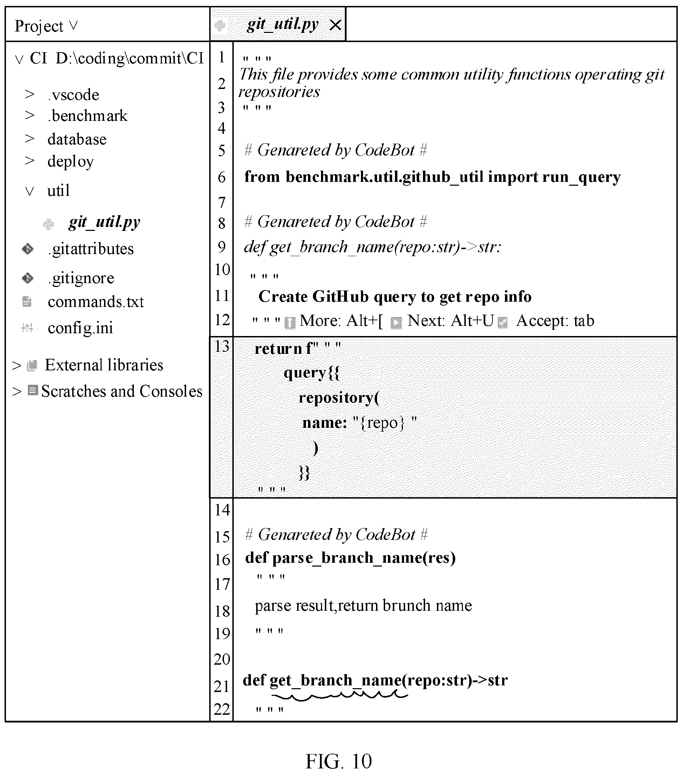

To handle a case of the calling of the undefined function, a reverse generation function is introduced into the code management system 100. From an interaction perspective, a working process of the reverse generation function is as follows. After confirming that called code is correct, the user may press a shortcut key (for example, Alt+Enter) at a function calling location, or right-click a comment and select "Generate code" (as shown in FIG. 9). In this case, the code management system 100 may automatically generate a function declaration of the function, including elements such as a signature of the function, a parameter list and type, a return value type, and a comment. As shown in FIG. 10, if the function is from another file, the code management system 100 automatically generates an import statement for the function instead of re-implementing the function; otherwise, a function declaration part of the function may be input into a task description decomposition model for further decomposition, or directly input into a code generation model for generation of implementation code.

A key to reverse generation by the code management system 100 is to analyze the calling of the function to obtain information that needs to be included in a signature part defined by the function. In this technical solution, each element of the signature part and a corresponding implementation are as follows.
(1) Function comment: A function calling statement is parsed, a line-level comment that modifies the statement is located, the comment is formatted as a function-level comment, and the comment is copied at a function definition location, and is matched with a context code format.
(2) Function name and parameter type: Context code that depends on data flows and control flows of the calling of the function, especially a statement related to a function parameter, is extracted by using a program slicing technology in software analysis; and function parameter types that one-to-one correspond to parameter names are obtained by using a type inference technology, and are brought to the function definition location in a syntax-compliant form.
(3) Return type: A return type of an expected function is obtained through inference by using a backward program slicing technology and the type inference technology based on a definition and use of a return value at a calling location, and the return type is brought to the function definition location in a syntax-compliant form.

It should be noted that an IDE of a Jetbrains series provides functions of detecting and prompting a function that does not exist, and automatically generating a signature. However, only a function signature part can be simply generated according to a rule, and important information such as a comment and a data type cannot be included. The reverse generation function in this embodiment of this application is compatible with and may reuse, in a reflection form, such a capability provided by the IDE, and a software analysis technology is further introduced to supplement more important information, so that an input of the code generation model or the task description decomposition model is more accurate. After confirming information such as a function name, an actual parameter, and a return value of a subtask, the user inputs the information into the model to further generate implementation code (that is, a function body) of the subtask. Compared with an original task, a decomposed subtask is easier to describe clearly for the developer and generate correct code for the model. The user may also modify and debug a result generated by the model through a unit test for subtasks in a generation process to achieve divide-and-conquer and step-by-step generation effects.

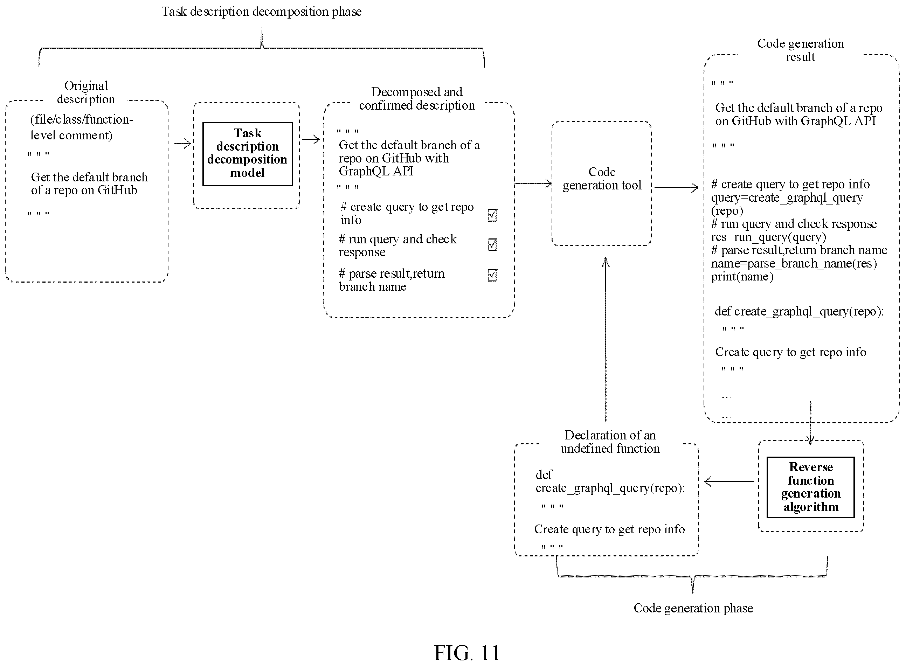

Then, refer to a diagram of an application scenario of another code management method shown in FIG. 11. In the scenario, the code management system 100 is provided for another tool in a form of a cloud service, and is invoked in a form of an API. The API may provide the following capabilities:
1. Decompose and confirm a task description. An input is a file/class/function-level comment, and an output is a decomposed block/line-level comment.
2. Perform code completion based on a task granularity. An input is a comment after decomposition, and an output is generated code. The code may include a code snippet (such as a simple statement and a code block), a statement, calling of a library function, and calling of a user-defined function.
3. Generate a function definition reversely based on the calling of the user-defined function. An input is the calling of the user-defined function and a context of the user-defined function, and an output is a complete function definition (including a declaration of a function and implementation code of the function).

Because the cloud service in this embodiment of this application is actually independent of a specific code generation technology, the foregoing capabilities are universal in different code generation technologies, may be integrated by different tools, and are used as a whole to improve user experience of code generation.

As shown in FIG. 11, Capability 1 provided in this embodiment of this application may be used before the code generation is actually triggered. First, a task description is decomposed through user interaction. After confirming a subtask description, the user may select one or more code generation tools (such as Copilot and Tabnine) or a completion tool (such as an IDE built-in completion and recommendation tool) to implement code. Recommendation of such tools is usually presented in a form of a recommendation list. In this case, Capability 2 may be used to select tools and sort a result (for example, for a part that may be implemented by using a simple line of code snippet, line-level completion is directly invoked, and a result is sorted first; and for a part that needs to be implemented through an API of a library, an API association result in an IDE is sorted first). When code generated by the tool is accepted by the user, but a function that is not implemented is called, based on Capability 3, a declaration of a function and a comment of the function may be automatically generated from a function calling statement and a context of the function, and the declaration of the function and the comment of the function are used as subtasks to trigger code generation again. In this way, the code becomes more complete gradually, and accuracy of each step can be verified through a unit test, to resolve an original problem.

Based on the code management method provided in embodiments of this application, an embodiment of this application further provides the code management system 100 that is described above. The following describes the code management system 100 with reference to the accompanying drawings.

Refer to a diagram of a structure of the code management system 100 shown in FIG. 1. The system 100 includes:
an interaction module 102, configured to receive a task description that is input by a user;
a decomposition module 104, configured to decompose the task description into a plurality of subtask descriptions; and
a generation module 106, configured to generate code for a plurality of subtasks based on the plurality of subtask descriptions, where the code for the plurality of subtasks one-to-one corresponds to the plurality of subtask descriptions.

The interaction module 102, the decomposition module 104, and the generation module 106 may be implemented by using a hardware module or a software module. The interaction module 102 may be implemented by using a transceiver or software on the transceiver. The decomposition module 104 and the generation module 106 may be implemented by using a computing device or a computing engine on the computing device. The following uses the decomposition module 104 as an example for description.

When being implemented by using software, the decomposition module 104 may be an application or an application program module, such as a computing engine, running on a computing device or a computing device cluster.

When being implemented by using hardware, the decomposition module 104 may include at least one computing device, such as a server. Alternatively, the decomposition module 104 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field programmable gate array (field programmable gate array, FPGA), generic array logic (generic array logic, GAL), or any combination thereof.

In some possible implementations, the decomposition module 104 is specifically configured to:
decompose the task description into reference descriptions of the plurality of subtasks by using a task description decomposition model; and
obtain the plurality of subtask descriptions based on a feedback of the user on the reference descriptions of the plurality of subtasks.

In some possible implementations, the feedback of the user on the reference descriptions of the plurality of subtasks includes confirmation, modification, or supplement.

In some possible implementations, the task description decomposition model is obtained through training in the following manner:
extracting a task description example and a subtask description example from a programming language corpus; and
training the task description decomposition model based on the task description example and the subtask description example by using a generative pre-training method, where a task description is used as an input of the task description decomposition model, and a subtask description is used as an output of the task description decomposition model.

In some possible implementations, the decomposition module 104 is specifically configured to:
decompose the task description into a plurality of first subtask descriptions;
present the plurality of first subtask descriptions to the user; and
when the user triggers a decomposition operation, decompose a target subtask description in the plurality of first subtask descriptions into a plurality of second subtask descriptions.

In some possible implementations, the interaction module 102 is further configured to:
present a comment on the code for the subtask to the user, where the comment on the code for the subtask includes the subtask description.

In some possible implementations, the generation module 106 is specifically configured to:
generate one or more of a code snippet, calling of a library function, or calling of a user-defined function based on the plurality of subtask descriptions.

In some possible implementations, when the user-defined function is not defined, the generation module 106 is further configured to:
generate a declaration of the user-defined function and implementation code of the user-defined function based on the calling of the user-defined function and a context of the user-defined function.

In some possible implementations, the generation module 106 is specifically configured to:
generate the declaration of the user-defined function based on the calling of the user-defined function and the context of the user-defined function, where the declaration of the user-defined function includes one or more of a comment, a parameter list, a parameter type, and a return value type of the user-defined function; and
generate the implementation code of the user-defined function based on the declaration of the user-defined function.

In some possible implementations, the interaction module 102 is further configured to:
receive a feedback of the user on the declaration of the user-defined function; and
update the declaration of the user-defined function based on the feedback of the user on the declaration of the user-defined function.

In some possible implementations, the generation module 106 is specifically configured to:
when the user triggers a decomposition operation, decompose the declaration of the user-defined function; and
generate the implementation code of the user-defined function based on a decomposition result.

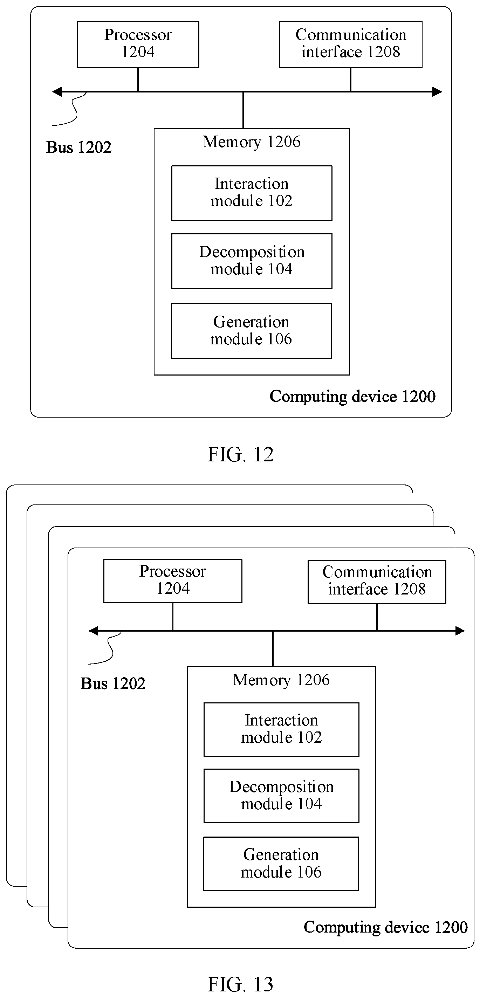

This application further provides a computing device 1200. As shown in FIG. 12, the computing device 1200 includes a bus 1202, a processor 1204, a memory 1206, and a communication interface 1208. The processor 1204, the memory 1206, and the communication interface 1208 communicate with each other via the bus 1202. The computing device 1200 may be a server or a terminal device. It should be understood that quantities of processors and memories in the computing device 1200 are not limited in this application.

The bus 1202 may be a peripheral component interconnect (peripheral component interconnect, PCI) bus, an extended industry standard architecture (extended industry standard architecture, EISA) bus, or the like. The bus may include an address bus, a data bus, a control bus, and the like. For ease of representation, only one line is for representing the bus in FIG. 12, but this does not mean that there is only one bus or only one type of bus. The bus 1202 may include a channel for transferring information between various components (for example, the memory 1206, the processor 1204, and the communication interface 1208) of the computing device 1200.

The processor 1204 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1206 may include a volatile memory (volatile memory), for example, a random access memory (random access memory, RAM). The memory 1206 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 1206 stores executable program code. The processor 1204 executes the executable program code to implement the foregoing code management method. Specifically, the memory 1206 stores instructions used by the code management system 100 to execute the code management method.

The communication interface 1208 uses a transceiver module, for example, but not limited to, a network interface card and a transceiver, to implement communication between the computing device 1200 and another device or a communication network.

An embodiment of this application further provides a computing device cluster. The computing device cluster includes at least one computing device. The computing device may be a server, such as a central server, an edge server, or a local server in a local data center. In some embodiments, the computing device may alternatively be a terminal device, such as a desktop computer, a notebook computer, or a smartphone.

As shown in FIG. 13, the computing device cluster includes at least one computing device 1200. A memory 1206 in the one or more computing devices 1200 in the computing device cluster may store same instructions used by the code management system 100 to execute the code management method.

In some possible implementations, the one or more computing devices 1200 in the computing device cluster may alternatively be configured to execute some instructions used by the code management system 100 to perform the code management method. In other words, a combination of one or more computing devices 1200 may jointly execute instructions used by the code management system 100 to perform the code management method.

It should be noted that memories 1206 in different computing devices 1200 in the computing device cluster may store different instructions used for performing some functions of the code management system 100.

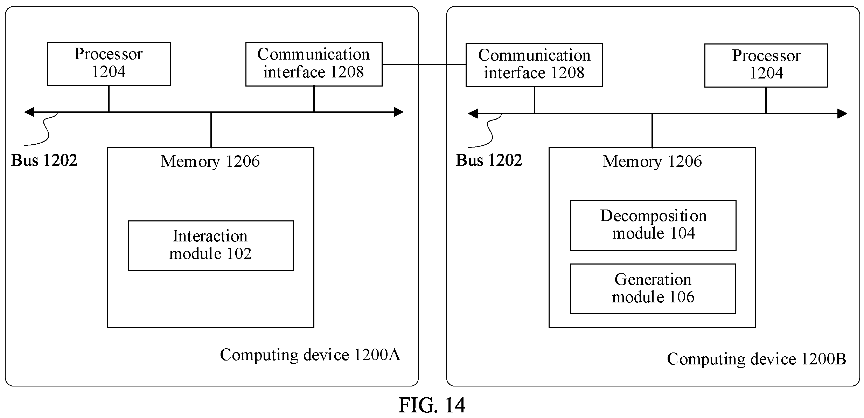

FIG. 14 shows a possible implementation. As shown in FIG. 14, two computing devices 1200A and 1200B are connected through a communication interface 1208. A memory in the computing device 1200A stores instructions used for performing functions of the foregoing interaction module 102. A memory in the computing device 1200B stores instructions used for performing functions of the foregoing decomposition module 104 and generation module 106. In other words, memories 1206 of the computing devices 1200A and 1200B jointly store instructions for the code management system 100 to perform the code management method.

A connection manner between the computing device clusters shown in FIG. 14 may be that, in the code management method provided in this application, a task description that is input by a user needs to be received, and the task description needs to be decomposed, to generate code. Therefore, it is considered that functions implemented by the foregoing interaction module 102 are performed by the computing device 1200A, and functions implemented by the foregoing decomposition module 104 and generation module 106 are performed by the computing device 1200B.

It should be understood that functions of the computing device 1200A shown in FIG. 14 may alternatively be completed by a plurality of computing devices 1200. Similarly, functions of the computing device 1200B may also be completed by a plurality of computing devices 1200.

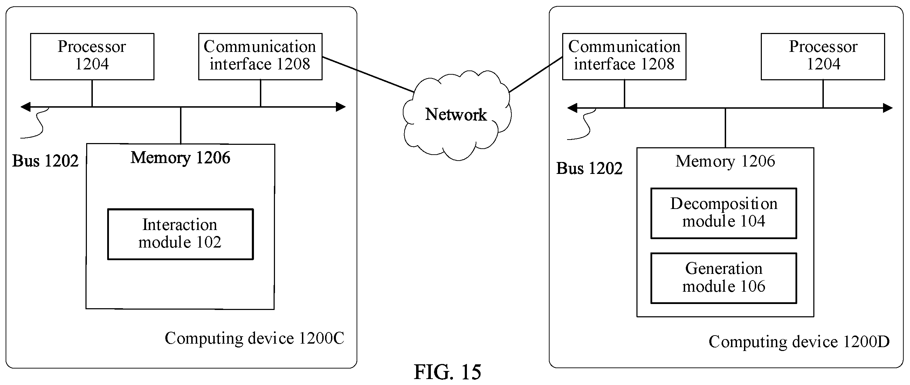

In some possible implementations, one or more computing devices in the computing device cluster may be connected through a network. The network may be a wide area network, a local area network, or the like. FIG. 15 shows a possible implementation. As shown in FIG. 15, two computing devices 1200C and 1200D are connected through a network. Specifically, communication interfaces in the computing devices are connected to the network. In this type of possible implementation, a memory 1206 in the computing device 1200C stores instructions used for performing functions of the foregoing interaction module 102. In addition, a memory 1206 in the computing device 1200D stores instructions used for performing functions of the foregoing decomposition module 104 and generation module 106.

A connection manner between the computing device clusters shown in FIG. 15 may be that, in the code management method provided in this application, a task description that is input by a user needs to be received, and the task description needs to be decomposed, to generate code. Therefore, it is considered that functions implemented by the foregoing interaction module 102 are performed by the computing device 1200C, and functions implemented by the foregoing decomposition module 104 and generation module 106 are performed by the computing device 1200D. It should be understood that functions of the computing device 1200C shown in FIG. 15 may alternatively be completed by a plurality of computing devices 1200. Similarly, functions of the computing device 1200D may also be completed by a plurality of computing devices 1200.

Embodiments of this application further provide a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the foregoing code management method applied to the code management system.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform the foregoing code management method.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A code management method, wherein the method comprises:
receiving a task description that is input by a user;
decomposing the task description into a plurality of subtask descriptions; and
generating code for a plurality of subtasks based on the plurality of subtask descriptions, wherein the code for the plurality of subtasks one-to-one corresponds to the plurality of subtask descriptions.

2. The method according to claim 1, wherein the decomposing the task description into a plurality of subtask descriptions comprises:
decomposing the task description into reference descriptions of the plurality of subtasks by using a task description decomposition model; and
obtaining the plurality of subtask descriptions based on a feedback of the user on the reference descriptions of the plurality of subtasks.

3. The method according to claim 2, wherein the feedback of the user on the reference descriptions of the plurality of subtasks comprises confirmation, modification, or supplement.

4. The method according to claim 2 or 3, wherein the task description decomposition model is obtained through training in the following manner:
extracting a task description example and a subtask description example from a programming language corpus; and
training the task description decomposition model based on the task description example and the subtask description example by using a generative pre-training method, wherein a task description is used as an input of the task description decomposition model, and a subtask description is used as an output of the task description decomposition model.

5. The method according to any one of claims 1 to 4, wherein the decomposing the task description into a plurality of subtask descriptions comprises:
decomposing the task description into a plurality of first subtask descriptions;
presenting the plurality of first subtask descriptions to the user; and
when the user triggers a decomposition operation, decomposing a target subtask description in the plurality of first subtask descriptions into a plurality of second subtask descriptions.

6. The method according to any one of claims 1 to 5, wherein the method further comprises:
presenting a comment on the code for the subtask to the user, wherein the comment on the code for the subtask comprises the subtask description.

7. The method according to any one of claims 1 to 6, wherein the generating code for a plurality of subtasks based on the plurality of subtask descriptions comprises:
generating one or more of a code snippet, calling of a library function, or calling of a user-defined function based on the plurality of subtask descriptions.

8. The method according to claim 7, wherein when the user-defined function is not defined, the method further comprises:
generating a declaration of the user-defined function and implementation code of the user-defined function based on the calling of the user-defined function and a context of the user-defined function.

9. The method according to claim 8, wherein the generating a declaration of the user-defined function and implementation code of the user-defined function based on the calling of the user-defined function and a context of the user-defined function comprises:
generating the declaration of the user-defined function based on the calling of the user-defined function and the context of the user-defined function, wherein the declaration of the user-defined function comprises one or more of a comment, a parameter list, a parameter type, and a return value type of the user-defined function; and
generating the implementation code of the user-defined function based on the declaration of the user-defined function.

10. The method according to claim 9, wherein the method further comprises:
receiving a feedback of the user on the declaration of the user-defined function; and
updating the declaration of the user-defined function based on the feedback of the user on the declaration of the user-defined function.

11. The method according to claim 9, wherein the generating the implementation code of the user-defined function based on the declaration of the user-defined function comprises:
when the user triggers a decomposition operation, decomposing the declaration of the user-defined function; and
generating the implementation code of the user-defined function based on a decomposition result.

12. A code management system, wherein the system comprises:
an interaction module, configured to receive a task description that is input by a user;
a decomposition module, configured to decompose the task description into a plurality of subtask descriptions; and
a generation module, configured to generate code for a plurality of subtasks based on the plurality of subtask descriptions, wherein the code for the plurality of subtasks one-to-one corresponds to the plurality of subtask descriptions.

13. The system according to claim 12, wherein the decomposition module is specifically configured to:
decompose the task description into reference descriptions of the plurality of subtasks by using a task description decomposition model; and
obtain the plurality of subtask descriptions based on a feedback of the user on the reference descriptions of the plurality of subtasks.

14. The system according to claim 13, wherein the feedback of the user on the reference descriptions of the plurality of subtasks comprises confirmation, modification, or supplement.

15. The system according to claim 13 or 14, wherein the task description decomposition model is obtained through training in the following manner:
extracting a task description example and a subtask description example from a programming language corpus; and
training the task description decomposition model based on the task description example and the subtask description example by using a generative pre-training method, wherein a task description is used as an input of the task description decomposition model, and a subtask description is used as an output of the task description decomposition model.

16. The system according to any one of claims 12 to 15, wherein the decomposition module is specifically configured to:
decompose the task description into a plurality of first subtask descriptions;
present the plurality of first subtask descriptions to the user; and
when the user triggers a decomposition operation, decompose a target subtask description in the plurality of first subtask descriptions into a plurality of second subtask descriptions.

17. The system according to any one of claims 12 to 16, wherein the interaction module is further configured to:
present a comment on the code for the subtask to the user, wherein the comment on the code for the subtask comprises the subtask description.

18. The system according to any one of claims 12 to 17, wherein the generation module is specifically configured to:
generate one or more of a code snippet, calling of a library function, or calling of a user-defined function based on the plurality of subtask descriptions.

19. The system according to claim 18, wherein the generation module is further configured to:
when the user-defined function is not defined, generate a declaration of the user-defined function and implementation code of the user-defined function based on the calling of the user-defined function and a context of the user-defined function.

20. The system according to claim 19, wherein the generation module is specifically configured to:
generate the declaration of the user-defined function based on the calling of the user-defined function and the context of the user-defined function, wherein the declaration of the user-defined function comprises one or more of a comment, a parameter list, a parameter type, and a return value type of the user-defined function; and
generate the implementation code of the user-defined function based on the declaration of the user-defined function.

21. The system according to claim 20, wherein the interaction module is further configured to:
receive a feedback of the user on the declaration of the user-defined function; and
update the declaration of the user-defined function based on the feedback of the user on the declaration of the user-defined function.

22. The system according to claim 20, wherein the generation module is specifically configured to:
when the user triggers a decomposition operation, decompose the declaration of the user-defined function; and
generate the implementation code of the user-defined function based on a decomposition result.

23. A computing device cluster, wherein the computing device cluster comprises at least one computing device, the at least one computing device comprises at least one processor and at least one memory, the at least one memory stores computer-readable instructions, and the at least one processor executes the computer-readable instructions, to enable the computing device cluster to perform the method according to any one of claims 1 to 11.

24. A computer-readable storage medium, comprising computer-readable instructions, wherein the computer-readable instructions are used for implementing the method according to any one of claims 1 to 11.

25. A computer program product, comprising computer-readable instructions, wherein the computer-readable instructions are used for implementing the method according to any one of claims 1 to 11.
